# EUROPÄISCHE PATENTSCHRIFT

(11) **EP 4 547 877 B1**
(45) Veröffentlichungstag und Bekanntmachung des Hinweises auf die Patenterteilung: **08.10.2025**
(21) Anmeldenummer: 23769121.7
(22) Anmeldetag: 07.09.2023
(51) Int. Cl.: C22B 5/12, C22B 7/00, C22B 9/05, C22B 15/00

(54) **VORRICHTUNG ZUR KUPFERPRODUKTION MIT VERBESSERTER CO-BILLANZ**
DEVICE FOR PRODUCING COPPER WITH AN IMPROVED COBALANCE
DISPOSITIF DE PRODUCTION DE CUIVRE À ÉQUILIBRE AMÉLIORÉ EN TERMES DE CO

(30) Priorität: 07.09.2022 DE 102022122729
(43) Veröffentlichungstag der Anmeldung: 07.05.2025
(73) Patentinhaber: SMS Group GmbH, 41069 Mönchengladbach (DE)
(72) Erfinder: GEIMER, Stephan, 45478 Mülheim an der Ruhr (DE); DEGEL, Rolf, 40880 Ratingen (DE); LUX, Tim, 40668 Meerbusch (DE); KAUSSEN, Frank, 50266 Aachen (DE); BOROWSKI, Nikolaus, 40489 Düsseldorf (DE); REUTER, Markus, 40629 Düsseldorf (DE)
(74) Vertreter: Richly & Ritschel Patentanwälte PartG mbB
(86) Internationale Anmeldenummer: PCT/EP2023/074527
(87) Internationale Veröffentlichungsnummer: WO 2024/052439

(56) Entgegenhaltungen:
- JP-A- S 493 812
- KR-A- 20080 099 119
- US-A- 3 770 421
- US-A- 4 099 962

## Beschreibung

Die vorliegende Erfindung betrifft eine Vorrichtung zur pyrometallurgischen Herstellung von hochreinem Kupfer aus einem kupferhaltigen Ausgangsstoff. Die Vorrichtung weist eine verbesserte CO₂-Bilanz auf und/oder ist eine Vorrichtung zur CO₂-neutralen Herstellung von hochreinem Kupfer bzw. eines hochreinen Kupferprodukts. Ferner betrifft die vorliegende Erfindung ein Verfahren zur Herstellung von hochreinem Kupfer bzw. eines hochreinen Kupferprodukts, insbesondere unter Verwendung der erfindungsgemäßen Vorrichtung, sowie die Verwendung der erfindungsgemäßen Vorrichtung.

Hochreines Kupfer wird im Wesentlichen über zwei Routen hergestellt. Zum einen durch Extraktion und Weiterbehandlung von Kupfererz (Primärproduktion), zum anderen beispielsweise durch das Recycling von kupferhaltigen Schrotten, End-of-Life-Produkten oder Produktionsrückständen (Sekundärproduktion).

Bei aus dem Stand der Technik bekannten Systemen werden die Schmelzaggregate üblicherweise mit fossilen Brennern betrieben, wobei als Energieträger Erdgas, Öl, etc. eingesetzt werden. Die anschließende Raffination erfolgt ebenfalls unter Verwendung (Einblasen) von fossilen Energieträgern, **z.B.** Erdgas in die Raffinationsöfen. Bei der Verbrennung dieser fossilen Brennstoffe wird eine große Menge an CO₂ erzeugt, die letztlich in die Atmosphäre entlassen wird. Diese geht in die Gesamtbilanz der Produktionsstätte und kann einen erheblichen Anteil ausmachen.

US 4 099 962 A beschreibt ein Verfahren und eine Vorrichtung zur Messung und Kontrolle der prozentualen Reduktion von Eisenerz in einer Gasreduktionsanlage. US 3 770 421 A beschreibt ein Verfahren und eine Vorrichtung zur Kontrolle der Zusammensetzung eines Reduktionsgases, das zur Reduzierung von Metallerzen verwendet wird. KR 2008 0099119 A beschreibt eine Vorrichtung zur kontinuierlichen Feuerraffination von Zink. JP S49 3812 A beschreibt ein kontinuierliches Verfahren zur Raffination sulfidischer Erze.

Der vorliegenden Erfindung liegt die Aufgabe zugrunde, eine Vorrichtung bereitzustellen, welche die Kupferproduktion mit einer verbesserten CO₂-Billanz ermöglicht.

Die der vorliegenden Erfindung zugrundeliegende Aufgabe wird durch eine Vorrichtung mit den Merkmalen von Anspruch 1 und einem Verfahren nach Anspruch 9 gelöst. Weitere bevorzugte Ausgestaltungen sind in den abhängigen Ansprüchen beschrieben.

Im Genaueren wird die der vorliegenden Erfindung zugrunde liegende Aufgabe gelöst durch eine Vorrichtung die zur Herstellung von Kupfer mit einer Reinheit von zumindest 95 % aus einem kupferhaltigen Ausgangsstoff geeignet und/oder eingerichtet ist, wobei die Vorrichtung zumindest ein Einschmelzaggregat zum Erzeugen eines flüssigen ersten kupferhaltigen Zwischenprodukts und zumindest ein Konvertierungsaggregat zum Erzeugen eines zweiten flüssigen kupferhaltigen Zwischenprodukts aus dem ersten kupferhaltigen Zwischenprodukt aufweist. Die Vorrichtung weist weiterhin eine Zuführeinrichtung auf, die zur Zuführung eines einstellbaren Volumenflusses eines wasserstoffhaltigen Gases in das Einschmelzaggregat und/oder das Konvertierungsaggregat eingerichtet ist und wobei das wasserstoffhaltige Gas ausgewählt ist aus der Gruppe bestehend aus H₂, NH₃, ein H₂-Inertgas-Gemisch, oder Gemische von H₂ oder NH₃ mit CH₄. Bei dem Inertgas kann es sich um Argon (Ar) oder, bevorzugt, Stickstoff (N₂) handeln. Erfindungsgemäß ist der mittels der Zuführeinrichtung eingestellte Volumenfluss des wasserstoffhaltigen Gases in das Einschmelzaggregat und/oder das Konvertierungsaggregat derart, dass der Wasserdampfgehalt im Abgas des Einschmelzaggregats und/oder des Konvertierungsaggregats innerhalb eines vorbestimmten Sollwertbereichs liegt. Bei dem Wasserdampfgehalt kann es sich um den absoluten Wasserdampfgehalt handeln. Bei dem Wasserdampfgehalt kann es sich bevorzugt um einen Prozessparameter im laufenden Betrieb des jeweilig betrachteten Aggregats handeln. Insbesondere kann es sich um den Wasserdampfgehalt handeln, der in der stationären Phase des im betrachteten Aggregat ablaufenden Prozesses entsteht.

Die erfindungsgemäße Vorrichtung zur Herstellung von Kupfer kann auch als Vorrichtung zur Aufreinigung von Kupfer, insbesondere als Vorrichtung zur Aufreinigung von Kupfer aus einem kupferhaltigen Ausgangsmaterial, bezeichnet werden.

Einer der Kerngedanken der vorliegenden Erfindung liegt in der Verwendung eines wasserstoffhaltigen Gases zur Bereitstellung der nötigen Reaktionsenergie und insbesondere zur gezielten Steuerung des Sauerstoffpartialdrucks im Einschmelzaggregat und insbesondere im Konvertierungsaggregat, in welchem die Raffination stattfindet. Über den Wasserdampfgehalt im Abgas des Einschmelzaggregats und/oder des Konvertierungsaggregats kann erfindungsgemäß die Zufuhr des wasserstoffhaltigen Gases so eingestellt werden, dass ein möglichst energieeffizienter Prozess abläuft. Hierdurch wird zum einen die Verwendung der üblichen fossilen Brennstoffe vermindert oder sogar vollständig verhindert. Zum anderen wird erreicht, dass der Prozess in Einschmelzaggregat und/oder Konvertierungsaggregat bei optimierter Zufuhr des wasserstoffhaltigen Gases abläuft. In beiden Fällen führt dies zu einer verbesserten CO₂-Bilanz.

Es stellte sich heraus, dass - um einen möglichst energieeffizienten Prozess zu gewährleisten - der vorbestimmte Sollwertbereich des Wasserdampfgehalt im Abgas von Einschmelzaggregat und/oder Konvertierungsaggregat spezifisch für das jeweilig betrachtete Aggregat ist.

Die erfindungsgemäße Vorrichtung kann zur Herstellung von Kupfer mit einer Reinheit von ≥ 95 %, ≥97 %, ≥ 98,2 % oder ≥ 98,9 % geeignet und/oder eingerichtet sein. Bevorzugt kann das hergestellte Kupfer in flüssiger oder fester Form vorliegen. Bei den angegebenen Kupferanteilen kann es sich bevorzugt um Gewichtsprozent (Gew.-%) handeln. Insbesondere für das erste bzw. das zweite Zwischenprodukt, welches mit der erfindungsgemäßen Vorrichtung hergestellt werden kann, gilt, dass dieses in flüssiger Form, d.h einem flüssigen Aggregatzustand, vorliegen kann. Wird, wie weiter unten beschrieben, der Aggregatzustand bei der Umwandlung des ersten Zwischenprodukts in das zweite Zwischenprodukt nicht gewechselt, so wird hierdurch vorteilhafter Weise der Herstellungsprozess weiter hinsichtlich des Energieverbrauchs optimiert und damit die CO₂-Bilanz verbessert. Mit anderen Worten kann erfindungsgemäß mittels der Vorrichtung das erste kupferhaltige Zwischenprodukt in das zweite kupferhaltige Zwischenprodukt umgewandelt werden ohne den Aggregatzustand, insbesondere den flüssigen Aggregatzustand, zu wechseln.

Bei dem kupferhaltigen Ausgangsmaterial kann es sich um jedes geeignetes kupferhaltiges Material handeln. Insbesondere kann es sich bei dem kupferhaltigen Ausgangsmaterial um ein im festen Aggregatzustand vorliegendes kupferhaltiges Ausgangsmaterial handeln. Weiterhin kann es sich bei dem kupferhaltigen Ausgangsmaterial um Kupferkonzentrat und/oder Kupferschrott handeln oder das kupferhaltigen Ausgangsmaterial kann Kupferkonzentrat und/oder Kupferschrott enthalten. Das Kupferkonzentrat kann einen Kupfergehalt von ≥ 10 % und ≤ 40 %, bevorzugt ≥ 15 % und ≤ 35 % aufweisen. Das Kupferkonzentrat kann sogenannter "low-grade", "medium-grade" oder "high-grade" Kupferschrott, insbesondere Schrott nach der WEEE-Richtlinie (EU-Richtlinie 2012/19/EU) sein. Das kupferhaltige Ausgangsmaterial kann einen Kupfergehalt in einem Bereich von ≥ 10 % und ≤ 99 %, ≥ 35 % und ≤ 99 % oder ≥ 81 % und ≤ 98 % aufweisen.

Die erfindungsgemäße Vorrichtung weist zumindest ein Einschmelzaggregat auf. Das Einschmelzaggregat kann geeignet und/oder eingerichtet sein, ein flüssiges erstes kupferhaltiges Zwischenprodukt zu erzeugen. Das Einschmelzaggregat kann geeignet und/oder eingerichtet sein, aus dem festen kupferhaltigen Ausgangsmaterial ein erstes kupferhaltiges Zwischenprodukt zu erzeugen, welches in flüssiger Form vorliegt.

Bei dem Einschmelzaggregat kann es sich um jegliches geeignetes und dem Fachmann bekanntes Einschmelzaggregat handeln. Insbesondere kann das Einschmelzaggregat geeignet und/oder eingerichtet sein den festen kupferhaltigen Ausgangsstoff aufzuschmelzen bzw. zu verflüssigen. Das Einschmelzaggregat weist ein Volumen auf, welches das kupferhaltige Ausgangsmaterial bzw. das erste kupferhaltige Zwischenprodukt aufnehmen kann. Das Einschmelzaggregat kann weiterhin dazu geeignet und/oder eingerichtet sein, das erste flüssige kupferhaltige Zwischenprodukt von unerwünschten Materialien, beispielsweise in Form von Schlacke, aus dem kupferhaltigen Ausgangsmaterial abzutrennen. Das Einschmelzaggregat kann weiterhin dazu geeignet und/oder eingerichtet sein einige im kupferhaltigen Ausgangsmaterial enthaltene Begleitelemente, insbesondere S, C, Al, Zn, Pb, Sn, Ni, Co, As und/oder Fe, zu oxidieren, die sich durch eine Schlacken- oder Gasphase von der Schmelze abtrennen. Hierzu kann das Einschmelzaggregat eine Zuführeinrichtung für sauerstoffhaltiges Gas aufweisen. Das Einschmelzaggregat kann weiterhin dazu geeignet und/oder eingerichtet sein eine pyrometallurgische Extraktion, insbesondere eine zweiphasige pyrometallurgische Extraktion, des Kupfers aus dem kupferhaltigen Ausgangsstoff auszuführen.

Das Einschmelzaggregat kann insbesondere ausgewählt sein aus der Gruppe bestehend aus einem Badschmelzer, einem Lichtbogenofen, insbesondere einem EAF *(electric arc furnace)* oder einem SAF *(submerged arc furnace),* einem Induktionsofen, einem TBRC (top *blown rotary converter);* auch bekannt als "Kaldo-Konverter"), einem TRF *(tilting refining furnace),* einem ETRF *(elliptical tilting refining furnace)* und einem Pfannenofen.

Der Badschmelzer kann einen Gasbrenner als Zuführeinrichtung aufweisen und zusätzlich hierzu eine Toplanze für die Zuführung von sauerstoff- und/oder wasserstoffhaltigem Gas. Der Badschmelzer kann weiterhin seitlich angeordnete Düsen zur Einleitung von sauerstoff- und/oder wasserstoffhaltigem Gas in das Volumen des Badschmelzers aufweisen.

EAF oder SAF können als Heizvorrichtung eine Heizvorrichtung zur Erzeugung eines (offenen) Lichtbogenofens aufweisen. Zusätzlich hierzu können der EAF oder der SAF Gasbrenner als Zuführeinrichtung aufweisen.

Der Induktionsofen kann eine induktive Heizung, insbesondere eine um den Tiegel herum angeordnete Induktionsspule aufweisen.

Der TBRC kann einen Gasbrenner als Zuführeinrichtung aufweisen und zusätzlich hierzu eine Toplanze als Zuführeinrichtung für die Zuführung von sauerstoff- und/oder wasserstoffhaltigem Gas.

TRF oder ETRF können einen Gasbrenner, insbesondere einen Stirnwandbrenner, als Zuführeinrichtung aufweisen. Weiterhin können ein oder mehrere Düsen zur Einleitung von sauerstoff- und/oder wasserstoffhaltigem Gas in das Volumen von TRF oder ETRF vorhanden sein. Diese Düsen von TRF oder ETRF können so ausgebildet sein, dass diese Unterbad gedreht werden können.

Der Pfannenofen kann einen Gasbrenner als Zuführeinrichtung und/oder eine elektrisch betriebene Heizvorrichtung aufweisen. Weiterhin kann der Pfannenofen eine Toplanze als Zuführeinrichtung für die Zuführung von sauerstoff- und/oder wasserstoffhaltigem Gas aufweisen.

Das erste kupferhaltige Zwischenprodukt kann einen Kupfergehalt von ≥ 70 %, bevorzugt ≥ 75 % und ≤ 99,8 %, bevorzugt ≤ 99,5 % aufweisen. Das erste kupferhaltige Zwischenprodukt kann weiterhin einen Sauerstoffgehalt von ≤ 6000 ppm, bevorzugt ≤ 4000 ppm aufweisen.

Das erste kupferhaltige Zwischenprodukt kann eine Temperatur von ≥ 1100 °C und ≤ 1400 °C, bevorzugt ≥ 1150 °C und ≤ 1350 °C aufweisen. Diese Temperatur kann insbesondere dann vorliegen, wenn das erste kupferhaltiges Zwischenprodukt den zuvor beschriebenen Kupfergehalt aufweist. Dieser Kupfergehalt des ersten kupferhaltigen Zwischenprodukts kann auch als Ziel-Kupfergehalt des ersten kupferhaltigen Zwischenprodukts bezeichnet werden. Diese Temperatur kann ebenfalls dann vorliegen, bevor das erste kupferhaltiges Zwischenprodukt in das Konvertierungsaggregat überführt wird und/oder wenn das erste kupferhaltiges Zwischenprodukt das Einschmelzaggregat verlässt.

Die erfindungsgemäße Vorrichtung weist zumindest ein Konvertierungsaggregat auf. Das Konvertierungsaggregat kann geeignet und/oder eingerichtet sein, aus dem ersten flüssigen kupferhaltigen Zwischenprodukt ein zweites kupferhaltiges Zwischenprodukt zu erzeugen, welches in flüssiger Form vorliegt. Das Konvertierungsaggregat weist ein Volumen auf, welches das erste bzw. das zweite kupferhaltige Zwischenprodukt aufnehmen kann.

Bei dem Konvertierungsaggregat kann es sich um jegliches geeignetes und dem Fachmann bekanntes Konvertierungsaggregat handeln. Das Konvertierungsaggregat kann auch als Raffinationsaggregat, insbesondere pyrolytisches Raffinationsaggregat bezeichnet werden. Insbesondere kann das Konvertierungsaggregat geeignet und/oder eingerichtet sein das flüssige erste kupferhaltige Zwischenprodukt zu reduzieren und/oder zu oxidieren, um das zweite flüssige kupferhaltige Zwischenprodukt zu erzeugen. Bevorzugt ist das Konvertierungsaggregat zumindest geeignet und/oder eingerichtet das flüssige erste kupferhaltiges Zwischenprodukt zu reduzieren. Ebenfalls bevorzugt ist das Konvertierungsaggregat geeignet und/oder eingerichtet das flüssige erste kupferhaltige Zwischenprodukt zunächst zu oxidieren und danach zu reduzieren.

Das Konvertierungsaggregat kann geeignet und/oder eingerichtet sein, den Sauerstoffpartialdruck in dem ersten flüssigen kupferhaltigen Zwischenprodukt zu erhöhen. Hierdurch kann das flüssige erste kupferhaltige Zwischenprodukt oxidiert werden. Dies kann beispielsweise durch Zuführung von Sauerstoffträgern wie beispielsweise Luft und/oder O₂ erreicht werden. Das Konvertierungsaggregat kann hierzu eine Zuführeinrichtung für einen Sauerstoffträger aufweisen. Durch die Erhöhung des Sauerstoffpartialdrucks in dem ersten flüssigen kupferhaltigen Zwischenprodukt können weitere Bestandteile, insbesondere Pb, Sn, Ni, Sb, Zn, Ni, Co, As, Fe, desselben oxidiert und dadurch verschlackt werden, wodurch eine weitere Aufreinigung erfolgt. Bei diesen Bestandteilen handelt es sich im Wesentlichen um sauerstoffaffinere Elemente als Kupfer, jedoch wird auch Kupfer oxidiert.

Das Konvertierungsaggregat kann zusätzlich oder alternativ geeignet und/oder eingerichtet sein, den Sauerstoffpartialdruck in dem ersten flüssigen kupferhaltigen Zwischenprodukt zu erniedrigen. Hierdurch kann das flüssige erste kupferhaltiges Zwischenprodukt reduziert werden.

Dies kann erfindungsgemäß durch die Zuführung des wasserstoffhaltigen Gases, ausgewählt aus der Gruppe bestehend aus H₂, NH₃, oder Gemische von H₂, CH₄ und/oder NH₃, erreicht werden. Das Konvertierungsaggregat kann hierzu eine Zuführeinrichtung für das wasserstoffhaltige Gas aufweisen.

Das Konvertierungsaggregat kann insbesondere ausgewählt sein aus der Gruppe bestehend aus einem PSC (*Peirce-Smith-Converter*), einem Pfannenofen, einem Anodenofen, einem TBRC, einem TRF und einem ETRF.

Der PSC kann einen Gasbrenner, insbesondere einen Stirnwandbrenner aufweisen. Weiterhin können ein oder mehrere Düsen zur Einleitung von sauerstoff- und/oder wasserstoffhaltigem Gas in das Volumen des PSC vorhanden sein. Diese Düsen des PSC können so ausgebildet sein, dass diese Unterbad gedreht werden können.

Der Anodenofen kann einen Gasbrenner, insbesondere einen Stirnwandbrenner aufweisen. Weiterhin können ein oder mehrere Düsen zur Einleitung von sauerstoff- und/oder wasserstoffhaltigem Gas in das Volumen des Anodenofen vorhanden sein. Diese Düsen des Anodenofen können so ausgebildet sein, dass diese Unterbad gedreht werden können.

Bei dem Einschmelzaggregat und dem Konvertierungsaggregat kann es sich um ein identisches Aggregat handeln. Dies kann insbesondere der Fall sein beim TBRC, dem TRF, dem ETRF und dem Pfannenofen. Hierdurch werden mehrere Vorteile erreicht. Insbesondere ist keine Überführung des ersten kupferhaltigen Zwischenprodukts vonnöten, wodurch Energie eingespart wird, um einem Abkühlen des ersten kupferhaltigen Zwischenprodukts entgegenzuwirken.

Die erfindungsgemäße Vorrichtung kann dazu geeignet und/oder eingerichtet sein, dass zweite flüssige kupferhaltiges Zwischenprodukt bereitzustellen, ohne das erste kupferhaltige Zwischenprodukt vom flüssigen in den festen Aggregatzustand übergehen zu lassen. Mit anderen Worten kann die Vorrichtung dazu geeignet und/oder eingerichtet sein, eine Überführung des ersten kupferhaltigen Zwischenprodukts von dem Einschmelzaggregat in das Konvertierungsaggregat durchzuführen, wobei das erste kupferhaltige Zwischenprodukt seinen flüssigen Aggregatzustand beibehält.

Die Vorrichtung kann dazu geeignet und/oder eingerichtet sein, die Temperatur des flüssigen ersten kupferhaltigen Zwischenprodukts oberhalb des Schmelzpunkts des ersten kupferhaltigen Zwischenprodukts zu halten. Dies kann dadurch erreicht werden, dass es sich, wie zuvor beschrieben, bei dem Einschmelzaggregat und dem Konvertierungsaggregat um ein identisches Aggregat handelt. Anderenfalls kann die Vorrichtung eine Überführungseinrichtung zur Überführung des flüssigen ersten kupferhaltigen Zwischenprodukts vom Einschmelzaggregat in das Konvertierungsaggregat aufweisen. Diese Überführungseinrichtung kann eine Heizvorrichtung aufweisen, beispielsweise eine elektrisch betriebene Heizung und/oder einen Gasbrenner. Alternativ oder zusätzlich dazu kann die Überführungseinrichtung auch thermisch isoliert sein, beispielsweise durch eine Abdeckung. Bei der Überführungseinrichtung kann es sich beispielsweise um Rinnen und/oder Pfannen handeln.

Das Einschmelzaggregat und/oder das Konvertierungsaggregat können zumindest eine Heizvorrichtung, insbesondere zumindest eine zusätzliche Heizvorrichtung aufweisen. Mit einer "zusätzlichen" Heizvorrichtung ist gemeint, dass zusätzlich zu der bereits in Einschmelzaggregat und/oder Konvertierungsaggregat standardmäßig enthaltenen Heizvorrichtung eine weitere Heizvorrichtung vorhanden ist. Beispielsweise weist ein Induktionsofen eine Induktionsheizung, beispielsweise eine um den Tiegel herum angeordnete Induktionsspule, oder ein Lichtbogenofen immer eine Lichtbogenheizung auf. Erfindungsgemäß kann das Aggregat dann zusätzlich zu dieser bekannten Heizvorrichtung zumindest eine weitere Heizvorrichtung aufweisen.

Bevorzugt kann es sich bei der Heizvorrichtung, insbesondere der zusätzlichen Heizvorrichtung, um eine elektrisch betriebene Heizvorrichtung und/oder einen Brenner, insbesondere einen Gasbrenner, handeln.

Weist die Heizvorrichtung oder die zusätzliche Heizvorrichtung einen Gasbrenner auf, so kann dieser mit der erfindungsgemäßen Zuführeinrichtung zur Zuführung eines wasserstoffhaltigen Gases in das Einschmelzaggregat und/oder das Konvertierungsaggregat identisch sein oder dieser kann davon unterschiedlich sein, **d. h.** durch eine eigenständige Baugruppe gebildet sein.

Die elektrisch betriebene Heizvorrichtung kann vorzugsweise mitelektrische Energie aus erneuerbaren Quellen betrieben werden. Umgekehrt kann die erfindungsgemäße Vorrichtung geeignet und/oder eingerichtet sein, die elektrisch betriebene Heizvorrichtung mit elektrischer Energie aus erneuerbaren Quellen zu betreiben. Hierdurch wird vorteilhafter Weise eine weiter verbesserte CO₂-Bilanz erreicht. Mit dem Begriff "elektrischer Energie aus erneuerbaren Quellen" kann CO₂-neutral bereitgestellte elektrische Energie und/oder "Grünstrom" bezeichnet werden. Elektrische Energie aus erneuerbaren Quellen schließt beispielsweise elektrische Energie aus Wasserkraft, Biomasse, Biogas, Geothermie, Windkraft und/oder Photovoltaik ein.

Die elektrisch betriebene Heizvorrichtung kann ausgewählt sein aus der Gruppe bestehend aus einer elektrisch betriebenen Strahlungsheizung, einer elektrisch betriebenen Konvektionsheizung, einer Widerstandsheizung, einer induktiven Heizung, einer Lichtbogenheizung und Kombinationen daraus. Bevorzugt kann die Heizvorrichtung als induktive Heizung und/oder Lichtbogenheizung ausgebildet sein, noch bevorzugter kann die Heizverrichtung als induktive Heizung ausgebildet sein.

Der Gasbrenner kann vorzugsweise mit einem wasserstoffhaltigen Gas, welches aus erneuerbaren Quellen erzeugt wurde, betrieben werden. Umgekehrt kann die Vorrichtung geeignet und/oder eingerichtet sein, den Gasbrenner mit einem wasserstoffhaltigen Gas, welches aus erneuerbaren Quellen erzeugt wurde, zu betreiben. Hierdurch wird vorteilhafter Weise ebenfalls eine weitere verbesserte CO₂-Bilanz erreicht. Mit dem Begriff "wasserstoffhaltigen Gas, welches aus erneuerbaren Quellen erzeugt wurde" kann CO₂-neutral bereitgestelltes wasserstoffhaltigen Gas und/oder "grünes Gas" bezeichnet werden. Ein Beispiel hierfür ist mit Elektrolyseuren durch Wasserspaltung gewonnener Wasserstoff, bei dem die für die Elektrolyse nötige Energie vollständig durch erneuerbare Energien wie z. B. Windenergie, Geothermie oder Sonnenenergie gedeckt wurde.

Die Heizvorrichtung des Einschmelzaggregats kann im Falle eines Induktionsofens oder eines Lichtbogenofens bevorzugt eine zusätzliche nichtelektrisch betriebene Heizvorrichtung, insbesondere ein Gasbrenner sein. Das Einschmelzaggregat weist dann zumindest eine elektrische Heizvorrichtung und zumindest eine nichtelektrische Heizvorrichtung, insbesondere einen Gasbrenner auf. Die Heizvorrichtung des Einschmelzaggregats kann im Falle eines Badschmelzers, eines TBRC, eines TRF oder eines ETRF bevorzugt eine zusätzliche elektrisch betriebene Heizvorrichtung, insbesondere eine Induktionsheizung sein. Das Einschmelzaggregat weist dann zumindest eine nichtelektrische Heizvorrichtung und zumindest eine elektrische Heizvorrichtung, insbesondere eine Induktionsheizung auf.

Die Heizvorrichtung des Konvertierungsaggregats kann eine zusätzliche elektrisch betriebene Heizvorrichtung, insbesondere eine Induktionsheizung sein. Das Konvertierungsaggregat weist dann zumindest eine nichtelektrische Heizvorrichtung, insbesondere einen Gasbrenner und zumindest eine elektrische Heizvorrichtung auf.

Das zweite kupferhaltige Zwischenprodukt kann einen Kupfergehalt in einem Bereich von ≥ 95,0 und ≤ 99,9 %, bevorzugt ≥ 98,0 und ≤ 99,9 %, oder ≥ 98,2 und ≤ 99,8 % aufweisen. Das zweite kupferhaltige Zwischenprodukt kann einen Sauerstoffgehalt von ≤ 2500 ppm, bevorzugt ≤ 2000 ppm aufweisen.

Bei der erfindungsgemäßen Zuführeinrichtung kann es sich um jegliche geeignete und dem Fachmann bekannte Zuführeinrichtung handeln, mittels derer das wasserstoffhaltige Gas in das Einschmelzaggregat und/oder das Konvertierungsaggregat geleitet oder injiziert werden kann. Eine Zuführeinrichtung (sowohl für das wasserstoff- als auch das sauerstoffhaltige Gas) kann beispielsweise als Brenner, insbesondere Gasbrenner und/oder Stirnbrenner ausgebildet sein oder in Form einer Gaslanze oder eines Injektors vorliegen. Die Zuführeinrichtung kann ein Ventil, ein Proportionalventil oder einen Stufenregler aufweisen.

Die Zuführeinrichtung kann in das Volumen des Einschmelzaggregats und/oder des Konvertierungsaggregats (welche das erste bzw. das zweite kupferhaltige Zwischenprodukt aufnimmt) münden und/oder dort zumindest teilweise oder vollständig angeordnet sein. Hierdurch wird gewährleistet, dass das wasserstoffhaltige Gas in das Einschmelzaggregat und/oder das Konvertierungsaggregat eingeleitet werden kann. Die Zuführeinrichtung kann weiterhin mit zumindest einem Reservoir für das wasserstoffhaltige Gas fluidverbunden sein. Insbesondere für den Fall, dass das wasserstoffhaltige Gas eine Gasmischung ist, können mehrere Reservoirs mit unterschiedlichen wasserstoffhaltigen Gasen mit der Zuführeinrichtung fluidverbunden sein. Zwischen den Reservoirs und der Zuführeinrichtung kann zumindest eine Mischeinrichtung zur Einstellung der Gasmischung angeordnet sein. Diese(s) Reservoir(s) und/oder Mischeinrichtung(en) kann/können Bestandteil der erfindungsgemäßen Vorrichtung sein.

Die Zuführeinrichtung kann eine Düse, insbesondere eine Raffinationsdüse, aufweisen. Ebenfalls kann die Zuführeinrichtung ausgewählt sein aus der Gruppe bestehend aus einer Düse, insbesondere eine Raffinationsdüse, einem Gasbrenner, einer Lanze, insbesondere einer Gaslanze, einem Spülstein und einem Impeller.

Bevorzugt kann es sich bei dem wasserstoffhaltigen Gas um eine Gasmischung, insbesondere um ein H₂-Inertgas-Gemisch oder noch bevorzugter eine Gasmischung aus H₂ oder NH₃ mit CH₄. Eine Gasmischung aus H₂ mit CH₄ wird hierbei besonders bevorzugt. Vorteilhafterweise verbessert sich die CO₂-Bilanz mit zunehmendem Ersatz von H₂ oder/und NH₃ als Energieträger, wenn hierdurch auf einen kohlenstoffhaltigen Energieträger, wie beispielsweise CH₄, verzichtet werden kann. Dies gilt insbesondere dann, wenn es sich bei dem H₂ und/oder dem NH₃ um "grün" erzeugte Gase handelt. Ebenfalls kann das wasserstoffhaltige Gas bevorzugt keinen Kohlenstoff enthalten. Diese Gasmischungen, insbesondere die Gasmischung bestehend aus H₂ und CH₄, können einen H₂-Anteil (in Volumenprozent) aufweisen in einem Bereich von ≥ 10 % und ≤ 80 %, bevorzugter ≥ 25 % und ≤ 70 %, ≥ 25 % und ≤ 50 %, noch bevorzugter ≥ 25 % und ≤ 35 %. Diese Gasmischungen, insbesondere die Gasmischung bestehend aus NH₃ und CH₄, können einen NH₃-Anteil (in Volumenprozent) aufweisen in einem Bereich von ≥ 10 % und ≤ 80 %, bevorzugter ≥ 25 % und ≤ 70 %, ≥ 25 % und ≤ 50 %, noch bevorzugter ≥ 25 % und ≤ 35 %. Diese Anteile von H₂ bzw. NH₃ haben sich als besonders vorteilhaft und damit geeignet für die erfindungsgemäße Vorrichtung zur Kupferproduktion mit verbesserter CO₂-Billanz erwiesen.

Bei den Gasgemischen von H₂ oder NH₃ mit CH₄ oder dem H₂-Inert-gasgemisch kann es sich um Gasgemische handeln, welche die genannten Komponenten aufweisen oder aus diesen bestehen.

Die Zuführeinrichtung kann eine regelbare Zuführeinrichtung sein, wobei die Vorrichtung eingerichtet ist, den Wasserdampfgehalt im Abgas des Einschmelzaggregats und/oder des Konvertierungsaggregats zu bestimmen und die Zuführeinrichtung in Abhängigkeit des bestimmten Wasserdampfgehalts zu regeln. Unter dem Begriff "regelbar" ist zu verstehen, dass die Menge des wasserstoffhaltigen Gases, welches im Betrieb der erfindungsgemäßen Vorrichtung in das Einschmelzaggregat und/oder das Konvertierungsaggregat geleitet wird, über die Zeit veränderlich ist. Mit anderen Worten kann der Volumenfluss des wasserstoffhaltigen Gases in die Aggregate und/oder der Partialdruck des wasserstoffhaltigen Gases in dem ersten bzw. dem zweiten flüssigen kupferhaltigen Zwischenprodukt während des Betriebs der Vorrichtung verändert werden. Eine solche Regelung des in das Einschmelzaggregat und/oder das Konvertierungsaggregat eingeleiteten Gasstroms kann beispielsweise über steuerbare Ventile oder Stufenregler erfolgen.

Die erfindungsgemäße Vorrichtung kann weiterhin dazu eingerichtet sein, den Wasserdampfgehalt im Abgas des Einschmelzaggregats und/oder des Konvertierungsaggregats zu bestimmen. Hierzu kann die Vorrichtung zumindest eine Einrichtung zur Bestimmung des Wasserdampfgehalts im Abgas des Einschmelzaggregats und/oder des Konvertierungsaggregats aufweisen. Die Bestimmung des Wasserdampfgehalts im Abgas kann vorzugsweise über ein FTIR-Spektrometer erfolgen. Alternativ oder zusätzlich dazu kann die Bestimmung des Wasserdampfgehalts über die Messung des Sauerstoffgehalts, des Wasserstoffgehalts und/oder der Temperatur im Abgas erfolgen. Die erfindungsgemäße Vorrichtung und/oder die Einrichtung zur Bestimmung des Wasserdampfgehalts kann hierfür zumindest einen Sensor aufweisen, der ausgewählt ist aus der Gruppe bestehend aus einem Sauerstoffsensor, einem Wasserstoffsensor, einem Temperatursensor oder Kombinationen davon.

Der zumindest eine Sensor kann zumindest teilweise oder vollständig in dem Abgasvolumenstrom des Einschmelzaggregats und/oder des Konvertierungsaggregats angeordnet sein.

Ein geeigneter Sensor zur Bestimmung des Wasserdampfgehalts und/oder des O₂-Gehalts im Abgas kann ein FTIR-Spektrometer sein.- Geeignete Sensoren/Fühler zur Temperaturmessung können Thermoelemente, beispielsweise PT100 Thermoelemente, insbesondere vom Typ K, Typ S oder Typ B sein.

Die Einstellung und/oder Regelung der Zuführeinrichtung kann über eine Recheneinheit erfolgen, die Bestandteil der erfindungsgemäßen Vorrichtung sein kann. Die Recheneinheit kann dazu eingerichtet sein, die Zuführeinrichtung einzustellen und/oder zu regeln. Die Recheneinheit kann weiterhin mit der Einrichtung zur Bestimmung des Wasserdampfgehalts verbunden sein, insbesondere mit zumindest einem oder allen FTIR-Spektrometer(n), Sauerstoffsensor(en), Wasserstoffsensor(en), Temperatursensor(en) und Kombinationen davon. Die Recheneinheit kann weiterhin dazu eingerichtet sein aus den Messwerten der Sensoren, insbesondere aus dem gemessenen Sauerstoffgehalt, dem Wasserstoffgehalt und/oder der Temperatur, den Wasserdampfgehalt im Abgas zu bestimmen.

Wie zuvor ausgeführt, ist der vorbestimmte Sollwertbereich des Wasserdampfgehalt im Abgas von Einschmelzaggregat und/oder Konvertierungsaggregat spezifisch für das jeweilig betrachtete Aggregat. Im Folgenden werden diese Sollwertbereiche, sowie bevorzugte Sollwertbereiche offenbart.

Der Sollwert für den Wasserdampfgehalt im Abgas des Einschmelzaggregats kann beim Einschmelzen in einem Bereich von ≥ 0 % und ≤ 99 %, ≥ 20 % und ≤ 99 %, ≥ 50 % und ≤ 99 %, ≥ 0 % und ≤ 51 %, oder > 0 und ≤ 5 % liegen.

Für den Fall eines Badschmelzers als Einschmelzaggregat kann der Sollwert für den Wasserdampfgehalt im Abgas beim Einschmelzen in einem Bereich von ≥ 15 % und ≤ 80 %, bevorzugt ≥ 15 % und ≤ 45 % liegen. Alternativ, insbesondere bei einem Badschmelzer aufweisend einen Überschallinjektor für das wasserstoffhaltige Gas, kann der Sollwert beim Einschmelzen in einem Bereich von ≥ 40 % und ≤ 99 **%,** bevorzugt ≥ 80 % und ≤ 99 % liegen.

Für den Fall eines Lichtbogenofens, insbesondere eines SAF, als Einschmelzaggregat kann der Sollwert für den Wasserdampfgehalt beim Einschmelzen in einem Bereich von ≥ 0 % und ≤ 10 %, bevorzugt ≥ 0 % und ≤ 5 % liegen.

Für den Fall eines Induktionsofens als Einschmelzaggregat kann der Sollwert für den Wasserdampfgehalt im Abgas beim Einschmelzen in einem Bereich von ≥ 0 % und ≤ 10 %, bevorzugt ≥ 0 % und ≤ 5 % liegen.

Für den Fall eines TBRC als Einschmelzaggregat kann der Sollwert für den Wasserdampfgehalt im Abgas beim Einschmelzen in einem Bereich von ≥ 40 % und ≤ 99 %, bevorzugt ≥ 80 % und ≤ 99 % liegen.

Für den Fall eines TRF oder eines ETRF als Einschmelzaggregat kann der Sollwert für den Wasserdampfgehalt im Abgas beim Einschmelzen in einem Bereich von ≥ 20 % und ≤ 99 %, bevorzugt ≥ 50 % und ≤ 99 % liegen.

Für den Fall eines Pfannenofens als Einschmelzaggregat kann der Sollwert für den Wasserdampfgehalt im Abgas beim Einschmelzen in einem Bereich von ≥ 40 % und ≤ 99 %, bevorzugt ≥ 80 % und ≤ 99 % liegen.

Der Sollwert für den Wasserdampfgehalt im Abgas des Konvertierungsaggregats kann beim Reduzieren in einem Bereich von ≥ 15 % und ≤ 99 %, bevorzugt ≥ 15 % und ≤ 45 % liegen.

Für den Fall eines PSC als Konvertierungsaggregats kann der Sollwert für den Wasserdampfgehalt im Abgas beim Reduzieren in einem Bereich von ≥ 20 % und ≤ 99 %, bevorzugt ≥ 50 % und ≤ 99 % liegen. Wird der PSC vor der Reduktion zur Oxidation des ersten kupferhaltigen Zwischenprodukts verwendet, kann der Sollwert für den Wasserdampfgehalt beim Oxidieren in einem Bereich von ≥ 0 % und ≤ 25 %, bevorzugt ≥ 0 % und ≤ 15 % liegen.

Für den Fall eines Pfannenofens als Konvertierungsaggregats kann der Sollwert für den Wasserdampfgehalt im Abgas beim Reduzieren in einem Bereich von ≥ 15 % und ≤ 45 %, bevorzugt ≥ 15 % und ≤ 35 % liegen. Wird der Pfannenofen vor der Reduktion zur Oxidation des ersten kupferhaltigen Zwischenprodukts verwendet, kann der Sollwert für den Wasserdampfgehalt beim Oxidieren in einem Bereich von ≥ 0 % und ≤ 25 %, bevorzugt ≥ 0 % und ≤ 15 % liegen.

Für den Fall eines Anodenofens als Konvertierungsaggregats kann der Sollwert für den Wasserdampfgehalt im Abgas beim Reduzieren in einem Bereich von ≥ 15 % und ≤ 45 %, bevorzugt ≥ 15 % und ≤ 35 % liegen. Wird der Anodenofen vor der Reduktion zur Oxidation des ersten kupferhaltigen Zwischenprodukts verwendet, kann der Sollwert für den Wasserdampfgehalt im Abgas beim Oxidieren in einem Bereich von ≥ 0 % und ≤ 10 %, bevorzugt ≥ 0 % und ≤ 5 % liegen.

Für den Fall eines TBRC als Konvertierungsaggregats kann der Sollwert für den Wasserdampfgehalt im Abgas beim Reduzieren in einem Bereich von ≥ 15 % und ≤ 45 %, bevorzugt ≥ 15 % und ≤ 35 % liegen. Wird der TBRC vor der Reduktion zur Oxidation des ersten kupferhaltigen Zwischenprodukts verwendet, kann der Sollwert für den Wasserdampfgehalt im Abgas beim Oxidieren in einem Bereich von ≥ 0 % und ≤ 15 %, bevorzugt ≥ 0 % und ≤ 10 % liegen.

Für den Fall eines TRF oder eines ETRF als Konvertierungsaggregats kann der Sollwert für den Wasserdampfgehalt im Abgas beim Reduzieren in einem Bereich von ≥ 15 % und ≤ 45 **%,** bevorzugt ≥ 15 % und ≤ 35 % liegen. Wird der TRF oder der ETRF vor der Reduktion zur Oxidation des ersten kupferhaltigen Zwischenprodukts verwendet, kann der Sollwert für den Wasserdampfgehalt im Abgas beim Oxidieren in einem Bereich von ≥ 0 % und ≤ 25 %, bevorzugt ≥ 0 % und ≤ 15 % liegen.

Die erfindungsgemäße Vorrichtung kann weiterhin ein Anodengießrad oder eine Granulationseinrichtung zur Umwandlung des zweiten kupferhaltigen Zwischenprodukts in ein drittes kupferhaltiges Zwischenprodukt aufweisen. Das dritte kupferhaltige Zwischenprodukt kann einen festen Aggregatzustand aufweisen. Bei dem dritten kupferhaltigen Zwischenprodukt kann es sich um Kupfergranulat oder eine Kupferanode jeweils mit einem Kupfergehalt von ≥ 95 % handeln. Das Anodengießrad kann eine thermische Isolierung und/oder eine Heizvorrichtung, insbesondere einen Gasbrenner, vorzugsweise einen Wasserstoffbrenner, aufweisen.

Die Vorrichtung kann eine Überführungseinrichtung zur Überführung des flüssigen zweiten kupferhaltigen Zwischenprodukts vom Konvertierungsaggregat in das Anodengießrad oder die Granulationseinrichtung aufweisen. Diese Überführungseinrichtung kann eine Heizvorrichtung aufweisen, beispielsweise eine elektrisch betriebene Heizung und/oder einen Gasbrenner, insbesondere einen Wasserstoffbrenner. Alternativ oder zusätzlich dazu kann die Überführungseinrichtung thermisch isoliert sein, beispielsweise durch eine Abdeckung. Bei der Überführungseinrichtung kann es sich beispielsweise um Rinnen und/oder Pfannen handeln.

Die Vorrichtung kann ein Raffinationselektrolyseaggregat zur elektrolytischen Umwandlung des kupferhaltigen Zwischenprodukts, insbesondere einer Kupferanode aufweisen. Die elektrische Energie zur Durchführung der Raffinationselektrolyse kann aus erneuerbaren Quellen stammen. Nach der Raffinationselektrolyse kann das kupferhaltige Produkt, insbesondere die Kupferkathode, einen Kupfergehalt von ≥ 99,9 %, bevorzugt ≥ 99,99 % aufweisen.

Die Vorrichtung kann ein Aggregat zur Laugung und/oder hydrometallurgischen Behandlung, sowie ein Gewinnungselektrolyseaggregat zur elektrolytischen Umwandlung des kupferhaltigen Zwischenprodukts, insbesondere von Kupfergranulat aufweisen. Das Aggregat zur Laugung und/oder hydrometallurgischen Umwandlung kann eine Zuführeinrichtung für ein wasserstoffhaltiges Gas, insbesondere Wasserstoff aufweisen. Das wasserstoffhaltige Gas kann aus erneuerbaren Quellen erzeugt worden sein. Die elektrische Energie zur Durchführung der Gewinnungselektrolyse kann aus erneuerbaren Quellen stammen. Nach der Gewinnungselektrolyse kann das kupferhaltige Produkt, insbesondere die Kupferkathode einen Kupfergehalt von ≥ 99,9 %, bevorzugt ≥ 99,99 % aufweisen.

Im Folgenden werden einige besonders bevorzugte Kombinationen aus Einschmelzaggregat und Konvertierungsaggregat offenbart.

Bevorzugt kann die erfindungsgemäße Vorrichtung einen Induktionsofen als Einschmelzaggregat und einen TRF oder einen ETRF als Konvertierungsaggregat aufweisen. Der mittels der Zuführeinrichtung eingestellte Volumenfluss des wasserstoffhaltigen Gases in den Induktionsofen ist derart, dass der Wasserdampfgehalt im Abgas des Induktionsofens beim Einschmelzen des kupferhaltigen Ausgangsmaterials innerhalb des vorbestimmten Sollwertbereichs von ≥ 0 % und ≤ 10 %, bevorzugt ≥ 0 % und ≤ 5 % liegt. Der mittels der Zuführeinrichtung eingestellte Volumenfluss des wasserstoffhaltigen Gases in den TRF oder den ETRF ist derart, dass der Wasserdampfgehalt im Abgas des TRF oder des ETRF beim Reduzieren des ersten kupferhaltigen Zwischenprodukts innerhalb des vorbestimmten Sollwertbereichs von ≥ 15 % und ≤ 45 %, bevorzugt ≥ 15 % und ≤ 35 % liegt. Wird der TRF oder der ETRF vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 25 %, bevorzugt ≥ 0 % und ≤ 15 % liegen.

Bevorzugt kann die erfindungsgemäße Vorrichtung einen Induktionsofen als Einschmelzaggregat und einen Pfannenofen als Konvertierungsaggregat aufweisen. Der mittels der Zuführeinrichtung eingestellte Volumenfluss des wasserstoffhaltigen Gases in den Induktionsofen ist derart, dass der Wasserdampfgehalt im Abgas des Induktionsofens beim Einschmelzen des kupferhaltigen Ausgangsmaterials innerhalb des vorbestimmten Sollwertbereichs von ≥ 0 % und ≤ 10 %, bevorzugt ≥ 0 % und ≤ 5 % liegt. Der mittels der Zuführeinrichtung eingestellte Volumenfluss des wasserstoffhaltigen Gases in den Pfannenofen ist derart, dass der Wasserdampfgehalt im Abgas des Pfannenofens beim Reduzieren des ersten kupferhaltigen Zwischenprodukts innerhalb des vorbestimmten Sollwertbereichs von ≥ 15 % und ≤ 45 %, bevorzugt ≥ 15 % und ≤ 35 % liegt. Wird der Pfannenofen vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 25 %, bevorzugt ≥ 0 % und ≤ 15 % liegen.

Bevorzugt kann die erfindungsgemäße Vorrichtung einen TRF als Einschmelzaggregat sowie als Konvertierungsaggregat aufweisen. Der mittels der Zuführeinrichtung eingestellte Volumenfluss des wasserstoffhaltigen Gases in den TRF ist derart, dass der Wasserdampfgehalt im Abgas des TRF beim Einschmelzen des kupferhaltigen Ausgangsmaterials innerhalb des vorbestimmten Sollwertbereichs von ≥ 20 % und ≤ 99 %, bevorzugt ≥ 50 % und ≤ 99 % liegt. Der mittels der Zuführeinrichtung eingestellte Volumenfluss des wasserstoffhaltigen Gases in den TRF ist derart, dass der Wasserdampfgehalt im Abgas des Pfannenofens beim Reduzieren des ersten kupferhaltigen Zwischenprodukts innerhalb des vorbestimmten Sollwertbereichs von ≥ 15 % und ≤ 45 %, bevorzugt ≥ 15 % und ≤ 35 % liegt. Wird der TRF vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 25 %, bevorzugt ≥ 0 % und ≤ 15 % liegen.

Bevorzugt kann die erfindungsgemäße Vorrichtung einen ETRF als Einschmelzaggregat sowie als Konvertierungsaggregat aufweisen. Der mittels der Zuführeinrichtung eingestellte Volumenfluss des wasserstoffhaltigen Gases in den ETRF ist derart, dass der Wasserdampfgehalt im Abgas des ETRF beim Einschmelzen des kupferhaltigen Ausgangsmaterials innerhalb des vorbestimmten Sollwertbereichs von ≥ 20 % und ≤ 99 %, bevorzugt ≥ 50 % und ≤ 99 % liegt. Der mittels der Zuführeinrichtung eingestellte Volumenfluss des wasserstoffhaltigen Gases in den ETRF ist derart, dass der Wasserdampfgehalt im Abgas des Pfannenofens beim Reduzieren des ersten kupferhaltigen Zwischenprodukts innerhalb des vorbestimmten Sollwertbereichs von ≥ 15 % und ≤ 45 %, bevorzugt ≥ 15 % und ≤ 35 % liegt. Wird der ETRF vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 25 %, bevorzugt ≥ 0 % und ≤ 15 % liegen.

Bevorzugt kann die erfindungsgemäße Vorrichtung einen Badschmelzer als Einschmelzaggregat und einen TBRC als Konvertierungsaggregat aufweisen. Der mittels der Zuführeinrichtung eingestellte Volumenfluss des wasserstoffhaltigen Gases in den Badschmelzer ist derart, dass der Wasserdampfgehalt im Abgas des Badschmelzers beim Einschmelzen des kupferhaltigen Ausgangsmaterials innerhalb des vorbestimmten Sollwertbereichs von ≥ 15 % und ≤ 80 %, bevorzugt ≥ 15 % und ≤ 45 % liegt. Für den Fall, dass der Badschmelzer einen Überschallinjektor aufweist, liegt der Sollwertbereich von ≥ 40 % und ≤ 99 %, bevorzugt ≥ 80 % und ≤ 99 %. Der mittels der Zuführeinrichtung eingestellte Volumenfluss des wasserstoffhaltigen Gases in den TBRC ist derart, dass der Wasserdampfgehalt im Abgas des Pfannenofens beim Reduzieren des ersten kupferhaltigen Zwischenprodukts innerhalb des vorbestimmten Sollwertbereichs von ≥ 15 % und ≤ 45 %, bevorzugt ≥ 15 % und ≤ 35 % liegt. Wird der TBRC vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 15 %, bevorzugt ≥ 0 % und ≤ 10 % liegen.

Bevorzugt kann die erfindungsgemäße Vorrichtung einen Lichtbogenofen, insbesondere einen EAF oder einen SAF, als Einschmelzaggregat und einen TRF oder einen ETRF als Konvertierungsaggregat aufweisen. Der mittels der Zuführeinrichtung eingestellte Volumenfluss des wasserstoffhaltigen Gases in den Lichtbogenofen ist derart, dass der Wasserdampfgehalt im Abgas des Lichtbogenofens beim Einschmelzen des kupferhaltigen Ausgangsmaterials innerhalb des vorbestimmten Sollwertbereichs von ≥ 0 % und ≤ 10 %, bevorzugt ≥ 0 % und ≤ 5 % liegt. Der mittels der Zuführeinrichtung eingestellte Volumenfluss des wasserstoffhaltigen Gases in den TRF oder den ETRF ist derart, dass der Wasserdampfgehalt im Abgas des TRF oder den ETRF beim Reduzieren des ersten kupferhaltigen Zwischenprodukts innerhalb des vorbestimmten Sollwertbereichs von ≥ 15 % und ≤ 45 %, bevorzugt ≥ 15 % und ≤ 35 % liegt. Wird der TRF oder der ETRF vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 25 %, bevorzugt ≥ 0 % und ≤ 15 % liegen.

Bevorzugt kann die erfindungsgemäße Vorrichtung einen Badschmelzer als Einschmelzaggregat und einen TRF oder einen ETRF als Konvertierungsaggregat aufweisen. Der mittels der Zuführeinrichtung eingestellte Volumenfluss des wasserstoffhaltigen Gases in den Badschmelzer ist derart, dass der Wasserdampfgehalt im Abgas des Badschmelzers beim Einschmelzen des kupferhaltigen Ausgangsmaterials innerhalb des vorbestimmten Sollwertbereichs von ≥ 15 % und ≤ 80 %, bevorzugt ≥ 15 % und ≤ 45 % liegt. Für den Fall, dass der Badschmelzer einen Überschallinjektor aufweist, liegt der Sollwertbereich von ≥ 40 % und ≤ 99 %, bevorzugt ≥ 80 % und ≤ 99 %. Der mittels der Zuführeinrichtung eingestellte Volumenfluss des wasserstoffhaltigen Gases in den TRF oder den ETRF ist derart, dass der Wasserdampfgehalt im Abgas des TRF oder den ETRF beim Reduzieren des ersten kupferhaltigen Zwischenprodukts innerhalb des vorbestimmten Sollwertbereichs von ≥ 15 % und ≤ 45 %, bevorzugt ≥ 15 % und ≤ 35 % liegt. Wird der TRF oder der ETRF vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 25 %, bevorzugt ≥ 0 % und ≤ 15 % liegen.

Bevorzugt kann die erfindungsgemäße Vorrichtung einen Lichtbogenofen, insbesondere einen EAF oder einen SAF, als Einschmelzaggregat und einen Anodenofen als Konvertierungsaggregat aufweisen. Der mittels der Zuführeinrichtung eingestellte Volumenfluss des wasserstoffhaltigen Gases in den Lichtbogenofen ist derart, dass der Wasserdampfgehalt im Abgas des Lichtbogenofens beim Einschmelzen des kupferhaltigen Ausgangsmaterials innerhalb des vorbestimmten Sollwertbereichs von ≥ 0 % und ≤ 10 %, bevorzugt ≥ 0 % und ≤ 5 % liegt. Der mittels der Zuführeinrichtung eingestellte Volumenfluss des wasserstoffhaltigen Gases in den Anodenofen ist derart, dass der Wasserdampfgehalt im Abgas des Anodenofens beim Reduzieren des ersten kupferhaltigen Zwischenprodukts innerhalb des vorbestimmten Sollwertbereichs ≥ 15 % und ≤ 45 %, bevorzugt ≥ 15 % und ≤ 35 % liegt. Wird der Anodenofen vor der Reduktion zusätzlich zur Oxidation des ersten kupferhaltigen Zwischenprodukts verwendet, so kann der Sollwert für den Wasserdampfgehalt beim Oxidieren in einem Bereich von ≥ 0 % und ≤ 10 %, bevorzugt ≥ 0 % und ≤ 5 % liegen.

Das zweite flüssige kupferhaltige Zwischenprodukt kann in zumindest ein weiteres Aggregat überführt und zu einem dritten kupferhaltigen Zwischenprodukt weiterverarbeitet werden, welches in einem festen Aggregatzustand vorliegt. Bei einem solchen Aggregat kann es sich bevorzugt um ein Anodengießrad oder um eine Granulationseinrichtung handeln. Das Anodengießrad kann eine Heizvorrichtung aufweisen, die als elektrische Heizvorrichtung oder Gasbrenner ausgebildet ist. Die Heizvorrichtung kann bevorzugt mit grünem Gas bzw. Grünstrom betrieben werden.

An das Anodengießrad kann sich eine Raffinationselektrolyseeinrichtung anschließen, die ebenfalls bevorzugt mit Grünstrom betrieben werden kann.

Die der vorliegenden Erfindung zugrundeliegende Aufgabe wird ebenfalls gelöst durch das im Folgenden beschriebene erfindungsgemäße Verfahren, sowie die erfindungsgemäße Verwendung der erfindungsgemäßen Vorrichtung. Hierbei werden, um Wiederholungen zu vermeiden, lediglich die wesentlichen Aspekte der Erfindung erneut explizit ausgeführt. Die beschriebenen Merkmale der erfindungsgemäßen Vorrichtung gelten gleichermaßen für das Verfahren bzw. die Verwendung und umgekehrt.

Das erfindungsgemäße Verfahren zur Herstellung von Kupfer bzw. eines Kupferprodukts mit einer Reinheit von zumindest 95 % weist die folgenden Verfahrensschritte auf:
a) Bereitstellen eines kupferhaltigen Ausgangsmaterials;
b) Einschmelzen des kupferhaltigen Ausgangsmaterials in einem Einschmelzaggregat zur Erzeugung eines ersten flüssigen kupferhaltigen Zwischenprodukts mit einem Kupfergehalt von ≥ 70 %; und
c) Reduzieren des ersten kupferhaltigen Zwischenprodukts in einem Konvertierungsaggregat zur Erzeugung eines zweiten kupferhaltigen Zwischenprodukts mit einem Kupfergehalt von ≥ 95 %.

Das erfindungsgemäße Verfahren ist weiterhin dadurch gekennzeichnet, dass während des Einschmelzens und/oder des Reduzierens ein wasserstoffhaltiges Gas in das Einschmelzaggregat und/oder das Konvertierungsaggregat zugeführt wird, sodass der Wasserdampfgehalt im Abgas des Einschmelzaggregats und/oder des Konvertierungsaggregats innerhalb eines vorbestimmten Sollwertbereichs liegt. Das wasserstoffhaltige Gas ist hierbei ausgewählt aus der Gruppe bestehend aus H₂, NH₃, einem H₂-Inertgas-Gemisch, oder Gemische von H₂ oder NH₃ mit CH₄.

Das erfindungsgemäße Verfahren kann bevorzugt unter Verwendung der erfindungsgemäßen Vorrichtung durchgeführt werden.

Erfindungsgemäß wird das kupferhaltige Ausgangsmaterial nach dessen Bereitstellung in Schritt a) in dem Einschmelzaggregat eingeschmolzen. Hierbei wird es in das erste flüssige kupferhaltige Zwischenprodukt umgewandelt.

Darauf wird das erste flüssige kupferhaltige Zwischenprodukt in Schritt b) im Konvertierungsaggregat in das zweite flüssige kupferhaltige Zwischenprodukt umgewandelt. Erneut wird darauf hingewiesen, dass es sich bei Einschmelzaggregat und Konvertierungsaggregat in einigen Ausführungsformen um ein identisches Aggregat handeln kann. Bei der Umwandlung von erstem flüssigen kupferhaltigen Zwischenprodukt in das zweite flüssige kupferhaltige Zwischenprodukt im Konvertierungsaggregat kann zumindest eine Reduktion des ersten flüssigen kupferhaltigen Zwischenprodukts stattfinden.

Während des Einschmelzens und/oder der Reduktion des ersten kupferhaltigen Zwischenprodukts wird das wasserstoffhaltige Gas in das Einschmelzaggregat und/oder das Konvertierungsaggregat zugeführt. Wie zuvor ausgeführt kann es sich hierbei insbesondere um zumindest ein wasserstoffhaltiges Gas handeln, welches aus erneuerbaren Quellen erzeugt wurde. Das zugeführte wasserstoffhaltige Gas wird hierbei in einer solchen Menge, bzw. einem solchen Volumenfluss in das Einschmelzaggregat und/oder das Konvertierungsaggregat zugeführt, dass der Wasserdampfgehalt im Abgas des Einschmelzaggregats und/oder des Konvertierungsaggregats innerhalb eines vorbestimmten und zuvor beschriebenen Sollwertbereichs liegt.

Das kupferhaltige Ausgangsmaterial kann während des Einschmelzens, d.h. in Verfahrensschritt b), durch Zuführung eines sauerstoffhaltigen Gases, insbesondere O₂ und/oder Luft, über eine Zuführeinrichtung des Einschmelzaggregats in das Einschmelzaggregat zumindest teilweise oxidiert werden. Bei dieser Oxidation werden beispielsweise S, C, Al, Zn, Pb, Sn, Ni, Co, As und/oder Fe im kupferhaltigen Ausgangsmaterial oxidiert.

Wie zuvor beschrieben sind einige der offenbarten Konvertierungsaggregate dazu eingerichtet, ein kupferhaltiges Zwischenprodukt nicht nur zu reduzieren, sondern ebenfalls zu oxidieren. Eine solche Oxidation wird vorzugsweise vor der Reduktion durchgeführt. Das erste kupferhaltige Zwischenprodukt kann daher mittels des Konvertierungsaggregats vor der Reduktion, d.h. nach dem Verfahrensschritt b) jedoch vor dem Verfahrensschritt c), zumindest teilweise oxidiert werden. Dies kann ebenfalls durch Zuführung eines sauerstoffhaltigen Gases, insbesondere O₂ und/oder Luft, über eine Zuführeinrichtung des Konvertierungsaggregats in das Konvertierungsaggregat erfolgen. Bei dieser Oxidation werden beispielsweise S, C, Al, Zn, Pb, Sn, Ni, Co, As und/oder Fe im ersten kupferhaltigen Zwischenprodukt oxidiert.

Verfahrensschritt b), d.h. das Einschmelzen, des erfindungsgemäßen Verfahren kann durchgeführt werden, bis der Sauerstoffgehalt des ersten kupferhaltigen Zwischenprodukts ≤ 6000 ppm beträgt. Alternativ oder zusätzlich hierzu kann der Verfahrensschritt c), d.h. die Reduktion, des erfindungsgemäßen Verfahrens durchgeführt werden, bis der Sauerstoffgehalt des zweiten kupferhaltigen Zwischenprodukts ≤ 2500 ppm beträgt.

Offenbart wird ebenfalls ein Verfahren zur Herstellung von Kupfer mit einer Reinheit von zumindest 95 %, aufweisend den Schritt: Reduzieren eines ersten kupferhaltigen Zwischenprodukts in einem Konvertierungsaggregat zur Erzeugung eines zweiten kupferhaltigen Zwischenprodukts mit einem Kupfergehalt von ≥ 95 %, wobei das Verfahren dadurch gekennzeichnet ist, dass während der Reduktion ein wasserstoffhaltiges Gas ausgewählt aus der Gruppe bestehend aus H₂, NH₃, einem H₂-Inertgas-Gemisch, oder Gemische von H₂ oder NH₃ mit CH₄ in das Konvertierungsaggregat zugeführt wird, sodass der Wasserdampfgehalt im Abgas des Konvertierungsaggregats innerhalb eines vorbestimmten Sollwertbereichs liegt.

Offenbart wird ebenfalls die Verwendung der erfindungsgemäßen Vorrichtung, insbesondere nach einem der Vorrichtungsansprüche, zur Herstellung von Kupfer mit einer Reinheit von zumindest 95 % aus einem kupferhaltigen Ausgangsmaterial.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Darstellung einer ersten Ausführungsform der erfindungsgemäßen Vorrichtung mit einem Induktionsofen als Einschmelzaggregat und einem TRF oder ETRF als Konvertierungsaggregat.
- Figur 2:: eine schematische Darstellung einer weiteren Ausführungsform der erfindungsgemäßen Vorrichtung mit einem TRF oder einem ETRF, der sowohl als Einschmelzaggregat als auch als Konvertierungsaggregat fungiert.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt.

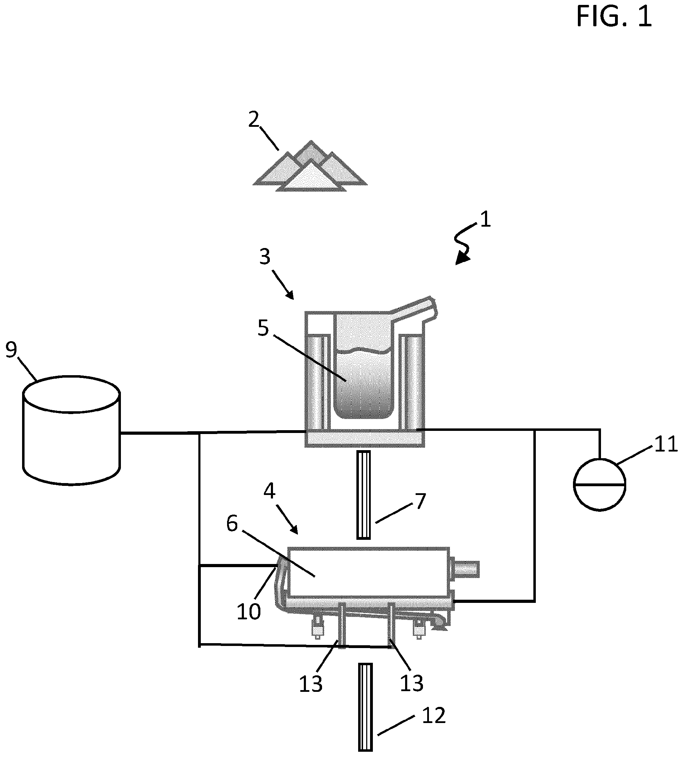

Figur 1 zeigt eine schematische Darstellung einer ersten Ausführungsform der erfindungsgemäßen Vorrichtung 1.

Die Vorrichtung 1 weist ein Einschmelzaggregat 3 in Form eines Induktionsofens, sowie einem Konvertierungsaggregat 4 in Form eines *tilting refining furnace* (TRF) auf. In einer alternativen Auführungsform kann anstelle des TRF ein elliptical *tilting refining furnace* (ETRF) eingesetzt werden.

In dem Volumen des Induktionsofens 3 ist das erste flüssige kupferhaltige Zwischenprodukt 5 zu erkennen, welches aus dem im festen Aggregatzustand vorliegenden kupferhaltigen Ausgangsmaterial 2 erzeugt wurde. In dem Volumen des TRF 4 ist das zweite flüssige kupferhaltige Zwischenprodukt 6 befindlich, welches durch Oxidation und Reduktion des ersten kupferhaltigen Zwischenprodukts 5 erzeugt wurde.

Der Induktionsofen 3 ist mittels der Überführungseinrichtung 7 in Form einer thermisch isolierten Rinne mit dem TRF 4 verbunden.

Hierdurch wird gewährleistet, dass das erste flüssige kupferhaltige Zwischenprodukt 5 aus dem Einschmelzaggregat 3 in das Konvertierungsaggregat 4 überführt werden kann, ohne dass es seinen Aggregatzustand (flüssig) ändert. Die erfindungsgemäße Vorrichtung 1 kann eine weitere Überführungseinrichtung 12 aufweisen, die ebenfalls in Form einer Rinne oder Pfanne ausgebildet sein kann. Diese weitere Überführungseinrichtung 12 dient der Überführung des zweiten flüssigen kupferhaltigen Zwischenprodukts 5 aus dem Konvertierungsaggregat 4, d.h. dem TRF, in zumindest ein zusätzliches Aggregat, z.B. ein Anodengießrad, zur weiteren Verarbeitung des kupferhaltigen Zwischenprodukts.

Das erste kupferhaltige Zwischenprodukt weist einen Kupfergehalt im Bereich von ≥ 75 % und ≤ 99,5 % auf. Das zweite kupferhaltige Zwischenprodukt weist einen Kupfergehalt im Bereich von ≥ 98,2 % und ≤ 99,8 % auf.

Der Induktionsofen 3 weist ein elektrisches Heizaggregat in Form einer Induktionsheizung auf, die durch eine um den Tiegel herum angeordnete Induktionsspule gebildet wird. Die Energieversorgung des elektrischen Heizaggregats des Induktionsofens 3 erfolgt über die Stromquelle 11, die elektrische Energie aus erneuerbaren Quellen bereitstellt.

Der Induktionsofen 3 weist weiterhin eine nicht dargestellte Zuführeinrichtung aufweisend eine Gaslanze zur Zuführung eines einstellbaren Volumenflusses eines wasserstoffhaltigen Gasgemisches in den Induktionsofen auf. Bevorzugt ist diese Zuführeinrichtung regelbar ausgeführt und wird in Abhängigkeit des Wasserdampfgehalts im Abgas des Induktionsofens geregelt. Der Volumenfluss des wasserstoffhaltigen Gasgemisches durch die Zuführeinrichtung ist in der stationären Phase des Einschmelzbetriebs so eingestellt, insbesondere geregelt, dass der Wasserdampfgehalt im Abgas des Induktionsofens < 10 % und bevorzugt < 5 % beträgt.

Die Zuführeinrichtung des Induktionsofens 3 ist mit einem Speicher oder Versorgungsanschluss 9 für das wasserstoffhaltige Gasgemisch verbunden. Bei dem Gasgemisch handelt es sich um ein Gemisch aus CH₄ und H₂ im Verhältnis von 65:35 %, welches auch im Konvertierungsaggregat 4 verwendet wird.

Der TRF 4 ist ebenfalls mit dem Speicher oder Versorgungsanschluss 9 für das wasserstoffhaltige Gasgemisch verbunden und weist eine Zuführeinrichtung 10 auf über welche das wasserstoffhaltige Gasgemisch in den TRF eingebracht werden kann. Die Zuführeinrichtung 10 ist hierbei als Gasbrenner, insbesondere als Stirnwandbrenner, ausgestaltet. Der TRF 4 kann weiterhin eine zusätzliche elektrische Heizvorrichtung aufweisen, die ebenfalls über die Stromquelle 11 mit Energie versorgt werden kann. Weiterhin weist der TRF eine Zuführeinrichtung in Form von 2 bis 8 Düsen 13 auf, über die ein sauerstoffhaltiges Gas, bevorzugt O₂ und/oder Luft in das Volumen des TRF 4 eingebracht werden kann. Zur Reduktion kann über dieselben Düsen 13 auch wasserstoffhaltiges Gas ausgewählt aus der Gruppe bestehend aus H₂, NH₃, einem H₂-Inertgas-Gemisch, oder Gemische von H₂ oder NH₃ mit CH₄ eingebracht werden.

Bevorzugt sind die Zuführeinrichtungen 10 und 13 des TRF regelbar ausgeführt und werden in Abhängigkeit des Wasserdampfgehalts im Abgas des TRF geregelt. Der Volumenfluss des wasserstoffhaltigen Gasgemisches durch die Zuführeinrichtung ist im Oxidationsbetrieb des TRF so eingestellt, bevorzugt geregelt, dass der Wasserdampfgehalt im Abgas des TRF in einem Bereich > 0 % und < 25 % und bevorzugt in einem Bereich > 0 % und < 20 % liegt. Im an den Oxidationsbetrieb anschließenden Reduktionsbetrieb des TRF ist der Volumenfluss hingegen so eingestellt, bevorzugt geregelt, dass der Wasserdampfgehalt im Abgas des TRF in einem Bereich > 15 % und < 45 % und bevorzugt in einem Bereich > 15 % und < 35 % liegt.

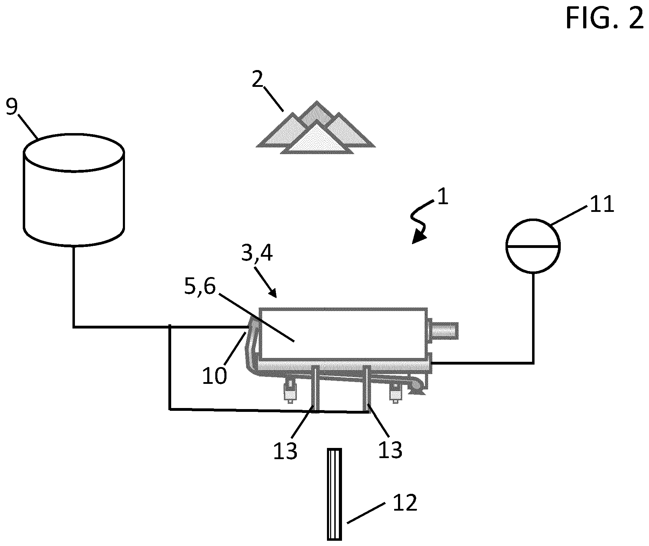

Figur 2 zeigt eine schematische Darstellung einer weiteren Ausführungsform der erfindungsgemäßen Vorrichtung 1.

Die Vorrichtung 1 weist lediglich einen TRF auf, der sowohl als Einschmelzaggregat 3 als auch als Konvertierungsaggregat 4 dient. In einer alternativen Ausführungsform handelt es sich um einen ETRF, der sowohl als Einschmelzaggregat 3 als auch als Konvertierungsaggregat 4 dient. TRF bzw. ETRF entsprechen denen der Figur 1. Das kupferhaltige Ausgangsprodukt 2 wird daher zunächst im TRF 4 in seiner Funktion als Einschmelzaggregat 3 zum ersten flüssigen kupferhaltigen Zwischenprodukt 5 umgewandelt. Anschließend wird das erste flüssige kupferhaltige Zwischenprodukt 5 im TRF 4 in das zweite flüssige kupferhaltigen Zwischenprodukt 6 umgewandelt. Dementsprechend entfällt die in Figur 1 dargestellte Überführungseinrichtung zur Überführung des flüssigen ersten kupferhaltigen Zwischenprodukts 7.

Der TRF 4 ist mit dem Speicher oder Versorgungsanschluss 9 für das wasserstoffhaltige Gasgemisch verbunden und weist eine Zuführeinrichtung 10 auf über welche das wasserstoffhaltige Gasgemisch in den TRF eingebracht werden kann. Die Zuführeinrichtung 10 ist hierbei als Gasbrenner, insbesondere als Stirnwandbrenner, ausgestaltet. Der TRF 4 kann optional eine zusätzliche elektrische Heizvorrichtung aufweisen, die ebenfalls über die Stromquelle 11 mit Energie versorgt werden kann. Weiterhin weist der TRF eine Zuführeinrichtung in Form von 2 bis 8 Düsen 13 auf, über die ein sauerstoffhaltiges Gas, bevorzugt O₂ und/oder Luft in das Volumen des TRF 4 eingebracht werden kann. Zur Reduktion kann über dieselben Düsen 13 auch wasserstoffhaltiges Gas ausgewählt aus der Gruppe bestehend aus H₂, NH₃, einem H₂-Inertgas-Gemisch, oder Gemische von H₂ oder NH₃ mit CH₄ eingebracht werden.

Bei dem über die Zuführeinrichtung eingeleiteten Gasgemisch kann es sich um ein Gemisch aus CH₄ und H₂ im Verhältnis von 60:40 % handeln.

Bevorzugt sind die Zuführeinrichtungen 10 und 13 des TRF regelbar ausgeführt und werden in Abhängigkeit des Wasserdampfgehalts im Abgas des TRF geregelt. Der Volumenfluss des Gasgemisches durch die Zuführeinrichtung 10 ist im Einschmelzbetrieb des TRF so eingestellt, bevorzugt geregelt, dass der Wasserdampfgehalt im Abgas des TRF in einem Bereich ≥ 20 % und ≤ 99 %, bevorzugt ≥ 50 % und ≤ 99 % liegt. Der Volumenfluss des Gasgemisches durch die Zuführeinrichtung 13 ist im Oxidationsbetrieb des TRF so eingestellt, bevorzugt geregelt, dass der Wasserdampfgehalt im Abgas des TRF in einem Bereich ≥ 0 % und ≤ 25 %, bevorzugt ≥ 0 % und ≤ 15 % liegt. Im an den Oxidationsbetrieb anschließenden Reduktionsbetrieb des TRF ist der Volumenfluss hingegen so eingestellt, bevorzugt geregelt, dass der Wasserdampfgehalt im Abgas des TRF in einem Bereich ≥ 15 % und ≤ 45 %, bevorzugt ≥ 15 % und ≤ 35 % liegt.

Auch die Vorrichtung 1 der Figur 2 kann eine weitere Überführungseinrichtung 12 aufweisen, die in Form einer Rinne oder Pfanne ausgebildet sein kann. Diese Überführungseinrichtung 12 dient der Überführung des zweiten flüssigen kupferhaltigen Zwischenprodukts 5 aus dem Konvertierungsaggregat 4, d.h. dem TRF, in zumindest ein zusätzliches Aggregat, z.B. ein Anodengießrad, zur weiteren Verarbeitung des kupferhaltigen Zwischenprodukts.

### Bezugszeichenliste

- 1: Vorrichtung zur Herstellung von Kupfer
- 2: Kupferhaltiges Ausgangsmaterial
- 3: Einschmelzaggregat
- 4: Konvertierungsaggregat, Raffinationsaggregat
- 5: Flüssiges erstes kupferhaltiges Zwischenprodukt im Volumen des Einschmelzaggregats
- 6: Flüssiges zweites kupferhaltiges Zwischenprodukt im Volumen des Konvertierungsaggregats
- 7: Überführungseinrichtung zur Überführung des flüssigen ersten kupferhaltigen Zwischenprodukts; Rinne oder Pfanne
- 8: Überführungseinrichtung zur Überführung des flüssigen zweiten kupferhaltigen Zwischenprodukts; Rinne oder Pfanne
- 9: Speicher oder Versorgungsanschluss für wasserstoffhaltiges Gas
- 10: Zuführeinrichtung für wasserstoffhaltigen Gases in das Einschmelzaggregat und/oder das Konvertierungsaggregat, insbesondere aus erneuerbaren Quellen
- 11: Stromquelle; elektrische Energie aus erneuerbaren Quellen
- 12: Überführungseinrichtung zur Überführung des flüssigen zweiten kupferhaltigen Zwischenprodukts; Rinne oder Pfanne
- 13: Zuführeinrichtung für wasserstoffhaltigen Gases oder Luft/O₂ in das Einschmelzaggregat und/oder das Konvertierungsaggregat, insbesondere aus erneuerbaren Quellen; Düse

## Patentansprüche

1. Vorrichtung (1) zur Herstellung von Kupfer mit einer Reinheit von zumindest 95 % aus einem kupferhaltigen Ausgangsmaterial (2), aufweisend:
- zumindest ein Einschmelzaggregat (3) zum Erzeugen eines flüssigen ersten kupferhaltigen Zwischenprodukts (5) und
- zumindest ein Konvertierungsaggregat (4) zum Erzeugen eines zweiten flüssigen kupferhaltigen Zwischenprodukts (6) aus dem ersten kupferhaltigen Zwischenprodukt,
- zumindest eine Zuführeinrichtung (10,11) die zur Zuführung eines einstellbaren Volumenflusses eines wasserstoffhaltigen Gases in das Einschmelzaggregat und/oder das Konvertierungsaggregat eingerichtet ist, wobei das wasserstoffhaltige Gas ausgewählt ist aus der Gruppe bestehend aus H₂, NH₃, einem H₂-Inertgas-Gemisch, oder Gemische von H₂ oder NH₃ mit CH₄,
**dadurch gekennzeichnet, dass**
der mittels der Zuführeinrichtung eingestellte Volumenfluss des wasserstoffhaltigen Gases in das Einschmelzaggregat und/oder das Konvertierungsaggregat derart ist, dass der Wasserdampfgehalt im Abgas des Einschmelzaggregats und/oder des Konvertierungsaggregats innerhalb eines vorbestimmten Sollwertbereichs liegt.

2. Vorrichtung nach Anspruch 1, wobei die Zuführeinrichtung eine regelbare Zuführeinrichtung ist und wobei die Vorrichtung eingerichtet ist, den Wasserdampfgehalt im Abgas des Einschmelzaggregats und/oder des Konvertierungsaggregats zu bestimmen und die Zuführeinrichtung in Abhängigkeit des bestimmten Wasserdampfgehalts zu regeln.

3. Vorrichtung nach einem der zuvor stehenden Ansprüche, wobei die Vorrichtung eingerichtet ist, das zweite flüssige kupferhaltige Zwischenprodukt bereitzustellen ohne das erste kupferhaltige Zwischenprodukt vom flüssigen in den festen Aggregatzustand übergehen zu lassen.

4. Vorrichtung nach einem der zuvor stehenden Ansprüche, wobei das Einschmelzaggregat und/oder das Konvertierungsaggregat zumindest eine Heizvorrichtung, insbesondere zumindest eine zusätzliche Heizvorrichtung, aufweist.

5. Vorrichtung nach Anspruch 4, wobei die Heizvorrichtung und/oder die zusätzliche Heizvorrichtung eine elektrische Heizvorrichtung ist und/oder einen Brenner, insbesondere einen Gasbrenner, aufweist.

6. Vorrichtung nach einem der Ansprüche 4 oder 5, wobei die Zuführeinrichtung zur Zuführung eines wasserstoffhaltigen Gases in das Einschmelzaggregat und/oder das Konvertierungsaggregat durch die Heizvorrichtung gebildet wird.

7. Vorrichtung nach einem der zuvor stehenden Ansprüche, wobei die Zuführeinrichtung eine Düse, insbesondere eine Raffinationsdüse, aufweist und/oder ausgewählt ist aus der Gruppe bestehend aus: einer Düse, insbesondere einer Raffinationsdüse, einem Gasbrenner, einer Lanze, einem Spülstein und einem Impeller.

8. Vorrichtung nach einem der zuvor stehenden Ansprüche, wobei die Vorrichtung zumindest eine Einrichtung zur Bestimmung des Wasserdampfgehalts aufweist; vorzugsweise wobei die Einrichtung ein FTIR-Spektrometer ist und/oder einen Sauerstoffsensor, einem Wasserstoffsensor, einem Temperatursensor oder Kombinationen davon aufweist.

9. Verfahren zur Herstellung von Kupfer mit einer Reinheit von zumindest 95 %, aufweisend die Schritte:
a) Bereitstellen eines kupferhaltigen Ausgangsmaterials;
b) Einschmelzen des kupferhaltigen Ausgangsmaterials in einem Einschmelzaggregat zur Erzeugung eines ersten flüssigen kupferhaltigen Zwischenprodukts mit einem Kupfergehalt von ≥ 70 %;
c) Reduzieren des ersten kupferhaltigen Zwischenprodukts in einem Konvertierungsaggregat zur Erzeugung eines zweiten kupferhaltigen Zwischenprodukts mit einem Kupfergehalt von ≥ 95 %,
**dadurch gekennzeichnet, dass**
während des Einschmelzens und/oder der Reduktion ein wasserstoffhaltiges Gas ausgewählt aus der Gruppe bestehend aus H₂, NH₃, einem H₂-Inertgas-Gemisch, oder Gemische von H₂ oder NH₃ mit CH₄ in das Einschmelzaggregat und/oder das Konvertierungsaggregat zugeführt wird,
sodass der Wasserdampfgehalt im Abgas des Einschmelzaggregats und/oder des Konvertierungsaggregats innerhalb eines vorbestimmten Sollwertbereichs liegt.

10. Verfahren nach Anspruch 9, wobei das kupferhaltige Ausgangsmaterials während des Einschmelzens durch Zuführung eines sauerstoffhaltigen Gases in das Einschmelzaggregat oxidiert wird.

11. Verfahren nach Anspruch 9 oder 10, wobei das erste kupferhaltige Zwischenprodukt mittels des Konvertierungsaggregats vor der Reduktion in Schritt b) durch Zuführung eines sauerstoffhaltigen Gases in das Konvertierungsaggregat oxidiert wird.

12. Vorrichtung nach einem der Ansprüche 1 bis 8 oder Verfahren nach einem der Ansprüche 9 bis 11, wobei der Sauerstoffgehalt des ersten kupferhaltigen Zwischenprodukts ≤ 6000 ppm und/oder der Sauerstoffgehalt des zweiten kupferhaltigen Zwischenprodukts ≤ 2500 ppm beträgt.

13. Vorrichtung nach einem der Ansprüche 1 bis 8 oder Verfahren nach einem der Ansprüche 9 bis 12, wobei der kupferhaltige Ausgangsmaterial ausgewählt ist aus der Gruppe bestehend aus Kupferkonzentrat, Kupferschrott oder Kombinationen davon.

14. Vorrichtung nach einem der Ansprüche 1 bis 8 oder Verfahren nach einem der Ansprüche 9 bis 13, wobei das Einschmelzaggregat ausgewählt ist aus der Gruppe bestehend aus: Badschmelzer, Lichtbogenofen, Induktionsofen, TBRC, TRF, ETRF und Pfannenofen.

15. Vorrichtung nach einem der Ansprüche 1 bis 8 oder Verfahren nach einem der Ansprüche 9 bis 14, wobei das Konvertierungsaggregat ausgewählt ist aus der Gruppe bestehend aus: PSC, Pfannenofen, Anodenofen, TBRC, TRF und ETRF.

16. Vorrichtung nach einem der Ansprüche 1 bis 8 oder Verfahren nach einem der Ansprüche 9 bis 15, wobei das wasserstoffhaltige Gas eine Mischung aus H₂ und CH₄ ist und einen H₂-Anteil in einem Bereich von ≥ 10 % und ≤ 80 %, bevorzugt ≥ 25 und ≤ 35 % aufweist oder wobei das wasserstoffhaltige Gas eine Mischung aus NH₃ und CH₄ ist und einen NH₃-Anteil in einem Bereich von ≥ 10 % und ≤ 80 %, bevorzugt ≥ 25 und ≤ 35 %aufweist.

17. Vorrichtung nach einem der Ansprüche 1 bis 8 oder Verfahren nach einem der Ansprüche 9 bis 16, wobei das zweite kupferhaltige Zwischenprodukt einen Kupfergehalt in einem Bereich von ≥ 97,0 % und ≤ 99,9 %, bevorzugt ≥ 98,0 % und ≤ 99,9 %, oder ≥ 98,2 % und ≤ 99,8 % aufweist.

18. Vorrichtung nach einem der Ansprüche 1 bis 8 oder Verfahren nach einem der Ansprüche 9 bis 17, wobei der Sollwert des Wasserdampfgehalts im Abgas des Einschmelzaggregats in einem Bereich von ≥ 0 % und ≤ 99 %, ≥ 50 % und ≤ 99 %, oder ≥ 0 % und ≤ 5 % liegt und/oder
wobei der Sollwert des Wasserdampfgehalts im Abgas des Konvertierungsaggregats beim Reduzieren in einem Bereich von ≥ 15 % und ≤ 45 % oder ≥ 15 % und ≤ 35 % liegt.

19. Verfahren nach einem der Ansprüche 9 bis 18 unter Verwendung der Vorrichtung nach einem der Ansprüche 1 bis 8.

## Claims

1. A device (1) for producing copper with a purity of at least 95% from a copper-containing starting material (2), comprising:
- at least one melting unit (3) for producing a liquid first copper-containing intermediate product (5) and
- at least one conversion unit (4) for producing a second liquid copper-containing intermediate product (6) from the first copper-containing intermediate product,
- at least one supply means (10, 11) which is configured to supply an adjustable volume flow of a hydrogen-containing gas into the melting unit and/or the conversion unit, wherein the hydrogen-containing gas is selected from the group consisting of H₂, NH₃, an H₂-inert gas mixture, or mixtures of H₂ or NH₃ with CH₄,
**characterized in that**
the volume flow of the hydrogen-containing gas into the melting unit and/or the conversion unit, which is set by means of the supply means, is such that the steam content in the exhaust gas of the melting unit and/or the conversion unit is within a specified target value range.

2. The device according to claim 1, wherein the supply means is a controllable supply means, and wherein the device is configured to determine the steam content in the exhaust gas of the melting unit and/or the conversion unit and to control the supply means depending on the determined steam content.

3. The device according to any of the preceding claims, wherein the device is configured to provide the second liquid copper-containing intermediate product without allowing the first copper-containing intermediate product to change from the liquid to the solid state of matter.

4. The device according to any of the preceding claims, wherein the melting unit and/or the conversion unit has at least one heating device, in particular at least one additional heating device.

5. The device according to claim 4, wherein the heating device and/or the additional heating device is an electric heating device and/or has a burner, in particular a gas burner.

6. The device according to any of claims 4 or 5, wherein the supply means for supplying a hydrogen-containing gas into the melting unit and/or the conversion unit is formed by the heating device.

7. The device according to any of the preceding claims, wherein the supply means has a nozzle, in particular a refining nozzle, and/or is selected from the group consisting of: a nozzle, in particular a refining nozzle, a gas burner, a lance, a purging stone and an impeller.

8. The device according to any of the preceding claims, wherein the device has at least one means for determining the steam content; preferably wherein the means is an FTIR spectrometer and/or has an oxygen sensor, a hydrogen sensor, a temperature sensor or combinations thereof.

9. A method for producing copper with a purity of at least 95%, comprising the steps of:
a) providing a copper-containing starting material;
b) melting the copper-containing starting material in a melting unit to produce a first liquid copper-containing intermediate product with a copper content of ≥ 70%;
c) reducing the first copper-containing intermediate product in a conversion unit to produce a second copper-containing intermediate product with a copper content of ≥ 95%,
**characterized in that**
during melting and/or reduction, a hydrogen-containing gas selected from the group consisting of H₂, NH₃, an H₂-inert gas mixture, or mixtures of H₂ or NH₃ with CH₄ is supplied into the melting unit and/or the conversion unit,
so that the steam content in the exhaust gas of the melting unit and/or the conversion unit is within a specified target value range.

10. The method according to claim 9, wherein the copper-containing starting material is oxidized during melting by supplying an oxygen-containing gas into the melting unit.

11. The method according to either claim 9 or claim 10, wherein the first copper-containing intermediate product is oxidized by means of the conversion unit before the reduction in step b) by supplying an oxygen-containing gas into the conversion unit.

12. The device according to any of claims 1 to 8 or the method according to any of claims 9 to 11, wherein the oxygen content of the first copper-containing intermediate product is ≤ 6000 ppm and/or the oxygen content of the second copper-containing intermediate product is ≤ 2500 ppm.

13. The device according to any of claims 1 to 8 or the method according to any of claims 9 to 12, wherein the copper-containing starting material is selected from the group consisting of copper concentrate, copper scrap or combinations thereof.

14. The device according to any of claims 1 to 8 or the method according to any of claims 9 to 13, wherein the melting unit is selected from the group consisting of: bath melter, arc furnace, induction furnace, TBRC, TRF, ETRF and ladle furnace.

15. The device according to any of claims 1 to 8 or the method according to any of claims 9 to 14, wherein the conversion unit is selected from the group consisting of: PSC, ladle furnace, anode furnace, TBRC, TRF and ETRF.

16. The device according to any of claims 1 to 8 or the method according to any of claims 9 to 15, wherein the hydrogen-containing gas is a mixture of H₂ and CH₄ and an H₂ proportion in a range of ≥ 10% and ≤ 80%, preferably ≥ 25 and ≤ 35%, or wherein the hydrogen-containing gas is a mixture of NH₃ and CH₄ and an NH₃ proportion in a range of ≥ 10% and ≤ 80%, preferably ≥ 25 and ≤ 35%.

17. The device according to any of claims 1 to 8 or method according to any of claims 9 to 16, wherein the second copper-containing intermediate product has a copper content in a range of ≥ 97.0% and ≤ 99.9%, preferably ≥ 98.0% and ≤ 99.9%, or ≥ 98.2% and ≤ 99.8%.

18. The device according to any of claims 1 to 8 or method according to any of claims 9 to 17, wherein the target value for the steam content in the exhaust gas of the melting unit is in a range of ≥ 0% and ≤ 99%, ≥ 50% and ≤ 99%, or ≥ 0% and ≤ 5%, and/or
wherein the target value of the steam content in the exhaust gas of the conversion unit during reduction is in a range of ≥ 15% and ≤ 45% or ≥ 15% and ≤ 35%.

19. The method according to any of claims 9 to 18 with use of the device according to any of claims 1 to 8.

## Revendications

1. Dispositif (1) permettant la production de cuivre comportant une pureté d'au moins 95 % à partir d'un matériau de départ (2) contenant du cuivre, présentant :
- au moins une unité de fusion (3) pour la production d'un premier produit intermédiaire (5) liquide contenant du cuivre, et
- au moins une unité de conversion (4) pour la production d'un second produit intermédiaire (6) liquide contenant du cuivre à partir du premier produit intermédiaire contenant du cuivre,
- au moins un moyen d'amenée (10, 11) qui est configuré pour l'amenée d'un débit volumique réglable d'un gaz contenant de l'hydrogène dans l'unité de fusion et/ou l'unité de conversion, dans lequel le gaz contenant de l'hydrogène est choisi dans le groupe constitué par H₂, NH₃, un mélange de gaz inerte et de H₂, ou des mélanges de H₂ ou de NH₃ avec CH₄,
**caractérisé en ce que**
le débit volumique du gaz contenant de l'hydrogène dans l'unité de fusion et/ou l'unité de conversion, lequel débit volumique est réglé à l'aide du moyen d'amenée, est tel que la teneur en vapeur d'eau dans les gaz d'échappement de l'unité de fusion et/ou de l'unité de conversion se situe dans une plage de valeurs de consigne prédéterminée.

2. Dispositif selon la revendication 1, dans lequel le moyen d'amenée est un moyen d'amenée réglable, et dans lequel le dispositif est configuré pour déterminer la teneur en vapeur d'eau dans les gaz d'échappement de l'unité de fusion et/ou de l'unité de conversion et pour régler le moyen d'amenée en fonction de la teneur en vapeur d'eau déterminée.

3. Dispositif selon l'une des revendications précédentes, dans lequel le dispositif est configuré pour fournir le second produit intermédiaire liquide contenant du cuivre sans faire passer le premier produit intermédiaire contenant du cuivre de l'état liquide à l'état solide.

4. Dispositif selon l'une des revendications précédentes, dans lequel l'unité de fusion et/ou l'unité de conversion présente au moins un dispositif de chauffage, en particulier au moins un dispositif de chauffage supplémentaire.

5. Dispositif selon la revendication 4, dans lequel le dispositif de chauffage et/ou le dispositif de chauffage supplémentaire est un dispositif de chauffage électrique et/ou comprend un brûleur, en particulier un brûleur à gaz.

6. Dispositif selon l'une des revendications 4 ou 5, dans lequel le moyen d'amenée pour l'amenée d'un gaz contenant de l'hydrogène dans l'unité de fusion et/ou l'unité de conversion est constitué par le dispositif de chauffage.

7. Dispositif selon l'une des revendications précédentes, dans lequel le moyen d'amenée comprend une buse, en particulier une buse de raffinage, et/ou est choisi dans le groupe constitué par : une buse, en particulier une buse de raffinage, un brûleur à gaz, une lance, une pierre de lavage et un impulseur.

8. Dispositif selon l'une des revendications précédentes, dans lequel le dispositif présente au moins un appareil permettant de déterminer la teneur en vapeur d'eau ; de préférence dans lequel l'appareil est un spectromètre FTIR et/ou présente un capteur d'oxygène, un capteur d'hydrogène, un capteur de température ou des combinaisons de ceux-ci.

9. Procédé pour la production de cuivre comportant une pureté d'au moins 95 %, présentant les étapes consistant à :
a) fournir un matériau de base contenant du cuivre ;
b) fondre le matériau de base contenant du cuivre dans une unité de fusion pour la production d'un premier produit intermédiaire liquide contenant du cuivre comportant une teneur en cuivre ≥ 70 % ;
c) réduire le premier produit intermédiaire contenant du cuivre dans une unité de conversion pour la production d'un second produit intermédiaire contenant du cuivre comportant une teneur en cuivre ≥ 95 %,
**caractérisé en ce que**
lors de la fusion et/ou la réduction, un gaz contenant de l'hydrogène choisi dans le groupe constitué de H₂, NH₃, d'un mélange de gaz inerte et de H₂, ou de mélanges de H₂ ou de NH₃ avec CH₄ est amené dans l'unité de fusion et/ou l'unité de conversion,
de sorte que la teneur en vapeur d'eau dans les gaz d'échappement de l'unité de fusion et/ou de l'unité de conversion se situe dans une plage de valeurs de consigne prédéterminée.

10. Procédé selon la revendication 9, dans lequel le matériau de départ contenant du cuivre est oxydé lors de la fusion par l'amenée d'un gaz contenant de l'oxygène dans l'unité de fusion.

11. Procédé selon la revendication 9 ou 10, dans lequel le premier produit intermédiaire contenant du cuivre est oxydé à l'aide de l'unité de conversion avant la réduction à l'étape b) par l'amenée d'un gaz contenant de l'oxygène dans l'unité de conversion.

12. Dispositif selon l'une des revendications 1 à 8 ou procédé selon l'une des revendications 9 à 11, dans lequel la teneur en oxygène du premier produit intermédiaire contenant du cuivre est ≤ 6000 ppm et/ou la teneur en oxygène du second produit intermédiaire contenant du cuivre est ≤ 2500 ppm.

13. Dispositif selon l'une des revendications 1 à 8 ou procédé selon l'une des revendications 9 à 12, dans lequel le matériau de départ contenant du cuivre est choisi dans le groupe constitué par un concentré de cuivre, des débris de cuivre ou des combinaisons de ceux-ci.

14. Dispositif selon l'une des revendications 1 à 8 ou procédé selon l'une des revendications 9 à 13, dans lequel l'unité de fusion est choisie dans le groupe constitué par : fondeur à bain, four à arc électrique, four à induction, TBRC, TRF, ETRF et four à poche.

15. Dispositif selon l'une des revendications 1 à 8 ou procédé selon l'une des revendications 9 à 14, dans lequel l'unité de conversion est choisie dans le groupe constitué par : PSC, four à poche, four à anode, TBRC, TRF et ETRF.

16. Dispositif selon l'une des revendications 1 à 8 ou procédé selon l'une des revendications 9 à 15, dans lequel le gaz contenant de l'hydrogène est un mélange de H₂ et de CH₄ et présente une proportion de H₂ dans une plage allant de ≥ 10 % à ≤ 80 %, de préférence de ≥ 25 à ≤ 35 %, ou dans lequel le gaz contenant de l'hydrogène est un mélange de NH₃ et de CH₄ et présente une proportion de NH₃ dans une plage allant de ≥ 10 % à ≤ 80 %, de préférence de ≥ 25 à ≤ 35 %.

17. Dispositif selon l'une des revendications 1 à 8 ou procédé selon l'une des revendications 9 à 16, dans lequel le second produit intermédiaire contenant du cuivre présente une teneur en cuivre dans une plage allant de ≥ 97,0 % à ≤ 99,9 %, de préférence de ≥ 98,0 % à ≤ 99,9 %, ou de ≥ 98,2 % à ≤ 99,8 %.

18. Dispositif selon l'une des revendications 1 à 8 ou procédé selon l'une des revendications 9 à 17, dans lequel la valeur de consigne de la teneur en vapeur d'eau dans les gaz d'échappement de l'unité de fusion se situe dans une plage allant de ≥ 0 % à ≤ 99 %, de ≥ 50 % à ≤ 99 % ou de ≥ 0 % à ≤ 5 % et/ou
dans lequel la valeur de consigne de la teneur en vapeur d'eau dans les gaz d'échappement de l'unité de conversion lors de la réduction se situe dans une plage allant de ≥ 15 % à ≤ 45 % ou de ≥ 15 % à ≤ 35 %.

19. Procédé selon l'une des revendications 9 à 18, mis en œuvre à l'aide du dispositif selon l'une des revendications 1 à 8.
